# EUROPÄISCHE PATENTSCHRIFT

(11) **EP 1 713 616 B1**
(45) Veröffentlichungstag und Bekanntmachung des Hinweises auf die Patenterteilung: **31.10.2007**
(21) Anmeldenummer: 05707082.3
(22) Anmeldetag: 29.01.2005
(51) Int. Cl.: B23Q 11/08

(54) **WERKZEUGMASCHINE, TRANSFER-WERKZEUGMASCHINE UND VERFAHREN ZUR BEARBEITUNG EINES WERKSTÜCKS**
MACHINE TOOL, TRANSFER MACHINE TOOL AND METHOD FOR MACHINING A WORKPIECE
MACHINE-OUTIL, MACHINE-OUTIL DE TRANSFERT ET PROCEDE D'USINAGE D'UNE PIECE

(30) Priorität: 12.02.2004 DE 102004006894
(43) Veröffentlichungstag der Anmeldung: 25.10.2006
(73) Patentinhaber: Ex-Cell-O GmbH, 73054 Eislingen (DE)
(72) Erfinder: HENZLER, Peter, 73035 Göppingen (DE); HORN, Wolfgang, 73035 Göppingen (DE)
(74) Vertreter: Hoeger, Stellrecht & Partner Patentanwälte
(86) Internationale Anmeldenummer: PCT/EP2005/000891
(87) Internationale Veröffentlichungsnummer: WO 2005/077595

(56) Entgegenhaltungen:
- EP-A- 0 295 225
- WO-A-00/76721
- DE-A1- 3 917 612
- DE-A1- 19 720 559

## Beschreibung

Die Erfindung betrifft eine Werkzeugmaschine mit einem Arbeitsraum, in welchem Werkstücke positionierbar sind und mit mindestens einem durch einen Werkzeughalter gehaltenen Werkzeug bearbeitbar sind, mit mindestens einer beweglichen Abdeckung, welche den Arbeitsraum in Richtung des Werkzeughalters begrenzt und einem Werkstück zustellbar ist, wobei die Abdeckung mit mindestens einer dem Werkzeug zugeordneten Öffnung zum Durchtritt des Werkzeugs versehen ist, und mit einem Abführungsraum für Späne.

Bei der Bearbeitung von Werkstücken fallen Bearbeitungsabfälle und insbesondere Späne an, die aus dem Arbeitsraum abgeführt werden müssen.

Aus der WO 00/76721 A1 ist eine Vorrichtung in einer Maschine für die spanabhebende Bearbeitung eines Werkstücks mittels mindestens eines Werkzeugs bekannt, welche eine Umhüllung aufweist, die die Werkzeuge umgibt. Die Umhüllung kann gegen ein Werkstück um einen zu bearbeitenden Punkt gedrückt werden.

Aus der DE 197 20 559 A1 ist eine Absaugvorrichtung für axial zugeführte Bearbeitungseinheiten bekannt, welche nicht mit der Trägerachse eines Werkzeugantriebs verbunden ist, so dass sie deren Bewegung nicht folgt und das Werkzeug zur Bearbeitung in den Bereich der Absaugung bewegt wird.

Der Erfindung liegt die Aufgabe zugrunde, eine Werkzeugmaschine der eingangs genannten Art so zu verbessern, daß die Späneentsorgung optimiert ist.

Diese Aufgabe wird erfindungsgemäß dadurch gelöst, daß die Abdeckung und eine außerhalb der Abdeckung liegende ortsfeste Begrenzung des Abführungsraums zur Bildung einer Dichtung überlappend angeordnet sind, wenn die Abdeckung dem Werkstück zugestellt ist.

Durch die erfindungsgemäße Lösung, bei der der Arbeitsraum durch die Abdeckung begrenzt ist, wird das Volumen des Arbeitsraums minimiert.

Dadurch wird die Menge an Spänen, die in den Arbeitsraum eindringen kann, minimiert, da eben der Abstand zwischen dem zu bearbeitenden Werkstück und einer Begrenzung des Arbeitsraums minimiert ist.

Es ist möglich, Späne über die Öffnung zum Durchtritt des Werkzeugs zu entsorgen, wodurch zusätzlich für eine Minimierung an Spänen gesorgt wird, die in den Arbeitsraum und in Hohlräume eines bearbeiteten Werkstücks eindringen können.

Durch die erfindungsgemäße Lösung wird auf konstruktiv einfache Weise eine breite Streuung an Spänen vermieden. Insbesondere im Zusammenhang mit einer Transfer-Werkzeugmaschine läßt sich ein modularer Aufbau erreichen, da bei einer Vielzahl von Arbeitsräumen für jeden Arbeitsraum eine oder mehrere individuelle Abdeckungen vorgesehen werden können mit dezentraler Späneabführung. Eine Abdeckung läßt sich auf einfache Weise ausbilden, beispielsweise durch eine mit einer oder mehreren Öffnungen versehenen Platte.

Es ist ein Abführungsraum für Späne vorgesehen, über den sich Späne beispielsweise einem Späneförderer zuführen lassen.

Die Abdeckung und eine außerhalb der Abdeckung liegende Begrenzung des Abführungsraums sind zur Bildung einer Dichtung überlappend angeordnet. Dadurch läßt sich auf einfache Weise eine Abdichtung erzielen, insbesondere dann, wenn die Abdeckung beweglich ist.

Dann begrenzt die Abdeckung den Abführungsraum zu dem Arbeitsraum hin. Über die Öffnungen sind der Arbeitsraum, in dem das Werkstück bearbeitet wird, und der Abführungsraum verbunden. Dadurch können dann Späne abgesaugt werden.

Der Abführungsraum umfaßt einen Bereich, welcher zwischen der Abdeckung und dem Werkzeughalter gebildet ist. Dieser Bereich ist mit der oder den Öffnungen in der Abdeckung verbunden, so daß Späne über die Öffnung bzw. Öffnungen in diesen Bereich gelangen können und dann abgesaugt werden können.

Ganz besonders vorteilhaft ist es, wenn der Abführungsraum in Wirkverbindung mit einer Einrichtung zur Unterdruckbeaufschlagung steht. Bei dieser Einrichtung kann es sich beispielsweise um ein Turbinenrad handeln. Es ist dadurch möglich, in dem Abführungsraum einen Unterdruck zu erreichen, welcher ein Einsaugen von Spänen in den Abführungsraum bewirkt und damit die Menge an Spänen, die in den Arbeitsraum gelangen können, minimiert.

Vorzugsweise weist die Abdeckung im Überlappungsbereich einen Bereich auf, welcher schräg zu einem an ein Werkstück anlegbaren Bereich liegt. Durch Überlappung läßt sich eine gute Dichtigkeit erreichen, wobei aufgrund der Schrägstellung eine Beweglichkeit der Abdeckung nicht gestört wird.

Ganz besonders vorteilhaft ist es, wenn die Abdeckung beweglich ist. Vor der Bearbeitung eines Werkstücks läßt sich die Abdeckung an das zu bearbeitende Werkstück zustellen und insbesondere an dieses anlegen, um einen Arbeitsraum mit minimiertem Volumen bereitzustellen. Vor der Bearbeitung und nach der Bearbeitung läßt sich durch eine entsprechende Bewegungsstellung der Abdeckung das Werkstück freigeben, um dieses in den Arbeitsraum transportieren zu können bzw. aus dem Arbeitsraum transportieren zu können. Durch eine bewegliche Abdeckung wird also während der Bearbeitung für eine optimierte Späneabführung gesorgt, wobei die Menge an Spänen, die in den Arbeitsraum eintreten kann, minimiert ist. Außerhalb der Bearbeitung ist eine Transportierbarkeit der Werkstücke, beispielsweise zwischen verschiedenen Bearbeitungsstationen, gewährleistet.

Insbesondere ist die Abdeckung in einer Richtung quer zu einer Transportrichtung von Werkstücken durch den Arbeitsraum verschieblich. Wenn ein Werkstück in seiner Bearbeitungsposition positioniert ist, dann kann der Arbeitsraum mit minimalem Volumen durch entsprechende Verschiebung der Abdeckung bzw. von Abdeckungen definiert werden.

Insbesondere ist die Bewegung der mindestens einen Abdeckung angetrieben, um über eine Hubbewegung eine Zustellung zu einem Werkstück zu erreichen bzw. eine Freigabe des Werkstücks zu erreichen.

Ganz besonders vorteilhaft ist es, wenn die Abdeckung an einem zu bearbeitenden Werkstück anlegbar ist. Über die Abdeckung läßt sich dann eine Art von Schablone ausbilden; wird beispielsweise eine Bohrbearbeitung durchgeführt, dann läßt sich eine Art von Bohrschablone ausbilden. Die Abdeckung dichtet dann einen Werkzeugwirkbereich an dem Werkstück gegenüber dem Arbeitsraum ab, so daß Späne nicht in den Arbeitsraum selber eindringen können bzw. die Eindringbarkeit von Spänen in den Arbeitsraum verringert ist. Es läßt sich über die Abdeckung auch weitgehend verhindern, daß Späne in Hohlräume eines Werkstücks eindringen. Im Ergebnis ist dann die Spänestreuung minimiert.

Günstigerweise ist die mindestens eine Öffnung in der Abdeckung so groß, daß Späne in den Abführungsraum gelangen. Die Öffnung muß so groß sein, daß ein Werkzeug über die Öffnung auf ein Werkstück wirken kann. Wenn noch gewährleistet ist, daß Späne über die Öffnung abgeführt werden können, dann läßt sich die Menge an Spänen, die in den Arbeitsraum eindringen, minimieren.

Insbesondere ist der Arbeitsraum quer zur Transportrichtung auf gegenüberliegenden Seiten durch Abdeckungen begrenzt und insbesondere durch ein Paar beabstandeter Abdeckungen begrenzt. Auf diese Weise läßt sich ein Werkstück von zwei Seiten her gleichzeitig bearbeiten, wobei der Anteil an Spänen, der in den Arbeitsraum gelangt, minimiert ist.

Insbesondere sind die Abdeckungen synchron beweglich, um die Wartezeiten zwischen Bearbeitungsvorgängen zu minimieren.

Günstigerweise ist eine Transfereinrichtung zum Transport von Werkstücken durch den Arbeitsraum vorgesehen. Durch die Transfereinrichtung wird ein Werkstück an einer entsprechenden Bearbeitungsstation zur Bearbeitung abgeliefert und nach der Bearbeitung übernimmt die Transfereinrichtung das bearbeitete Werkstück wieder zum Weitertransport. Über die Transfereinrichtung läßt sich das Werkstück auch in seiner Bearbeitungsposition im Arbeitsraum positionieren.

Vorteilhafterweise sind die mindestens eine Abdeckung und die Transfereinrichtung synchronisiert gesteuert. Wenn dann beispielsweise die Transfereinrichtung ein Werkstück in seiner Bearbeitungsposition positioniert hat, dann läßt sich zeitlich unmittelbar eine Hubbewegung der Abdeckungen auf das Werkstück zu und insbesondere zum Anlegen an das Werkstück einleiten. Nach Bearbeitung des Werkstücks und Hubbewegung der Abdeckungen von dem Werkstück weg, läßt sich ein Weitertransport des Werkstücks initiieren, sobald die Abdeckungen (und gegebenenfalls Werkzeughalter) in eine geeignete Position verschoben sind, in welcher das Werkstück freigegeben ist.

Ganz besonders vorteilhaft ist es, wenn die mindestens eine Abdeckung austauschbar angeordnet ist. Dadurch ist eine Anpaßbarkeit der Werkzeugmaschine gewährleistet, beispielsweise wenn ein anderer Typ von Werkstücken bearbeitet werden soll bzw. wenn andere Bearbeitungsvorgänge vorgesehen sind.

Ganz besonders vorteilhaft ist es, wenn eine Mehrzahl von Arbeitsräumen vorgesehen ist. In unterschiedlichen Arbeitsräumen lassen sich unterschiedliche Bearbeitungsvorgänge durchführen. Es läßt sich dadurch eine Transferstraße realisieren, bei deren Durchlaufen das Werkstück in unterschiedlichen Bearbeitungsstationen bearbeitet wird.

Insbesondere ist erfindungsgemäß eine Transfer-Werkzeugmaschine realisiert, welche mindestens eine erfindungsgemäße Werkzeugmaschine umfaßt, wobei eine Mehrzahl von Arbeitsräumen vorgesehen ist. In den einzelnen Arbeitsräumen lassen sich unterschiedliche Bearbeitungsvorgänge durchführen. Durch die erfindungsgemäße Lösung ist ein modularer Aufbau erreichbar.

Insbesondere ist eine Mehrzahl von Bearbeitungsstationen mit jeweiligen Arbeitsräumen vorgesehen. Die einzelnen Bearbeitungsstationen lassen sich getrennt voneinander optimieren, wobei insbesondere für jede einzelne Bearbeitungsstation eine getrennte Späneabführung vorgesehen werden kann. Dies wiederum ermöglicht einen modularen Aufbau, da beispielsweise bezüglich der Späneabführung oder bezüglich der Kühlmittelversorgung die einzelnen Bearbeitungsstationen entkoppelt werden können.

Insbesondere folgen die Arbeitsräume in Transportrichtung der Werkstücke aufeinander.

Vorzugsweise erfolgt die Späneabführung und/oder Kühlmittelabführung aus den Arbeitsräumen individuell, das heißt dezentral. Dadurch läßt sich ein modularer Aufbau mit individueller Optimierung in den Bearbeitungsstationen erreichen.

Wenn eine bewegliche Abdeckung an ein zur Bearbeitung positioniertes Werkstück angefahren wird und ein Werkzeug über eine zugeordnete Öffnung in der Abdeckung auf das Werkstück wirkt, dann läßt sich die Entsorgung von Bearbeitungsabfällen wie Spänen optimieren.

Der Arbeitsraum wird dadurch in seinem Volumen minimiert, so daß ein verringerter Anteil von Spänen in den Arbeitsraum gelangen kann. Dadurch wiederum läßt sich die Späneentsorgung optimieren. Insbesondere lassen sich Späne über die Öffnung für das Werkzeug abführen.

Gànz besonders vorteilhaft ist es, wenn die Abdeckung an das Werkstück angelegt wird. Dadurch läßt sich eine Wirkzone eines Werkzeugs auf das Werkstück gewissermaßen abdichten, so daß der Späneanfall in dem Arbeitsraum minimierbar ist.

Insbesondere wird ein Raum hinter der Abdeckung mit Unterdruck beaufschlagt, um so für eine Späneabsaugung zu sorgen.

Die nachfolgende Beschreibung einer bevorzugten Ausführungsform dient im Zusammenhang mit der Zeichnung der näheren Erläuterung der Erfindung.
Es zeigen:
- Figur 1: eine schematische Schnitt-Vorderansicht in Transportrichtung eines Ausführungsbeispiels einer erfindungsgemäßen Werkzeugmaschine;
- Figur 2: eine Detailansicht der Figur 1;
- Figur 3: eine seitliche Schnittansicht der Werkzeugmaschine gemäß Figur 1, und
- Figur 4: eine Draufsicht auf die Werkzeugmaschine gemäß Figur 1.

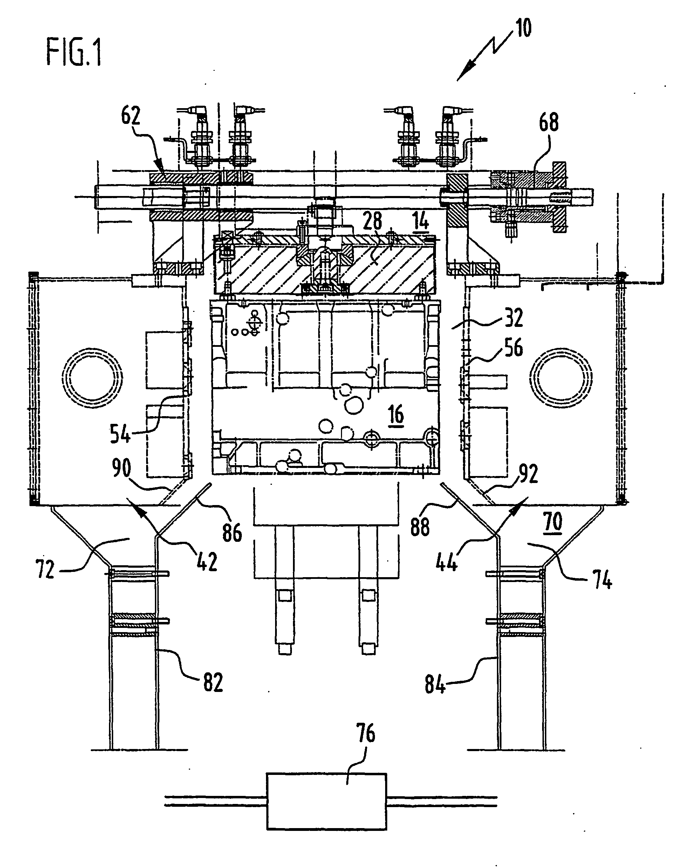

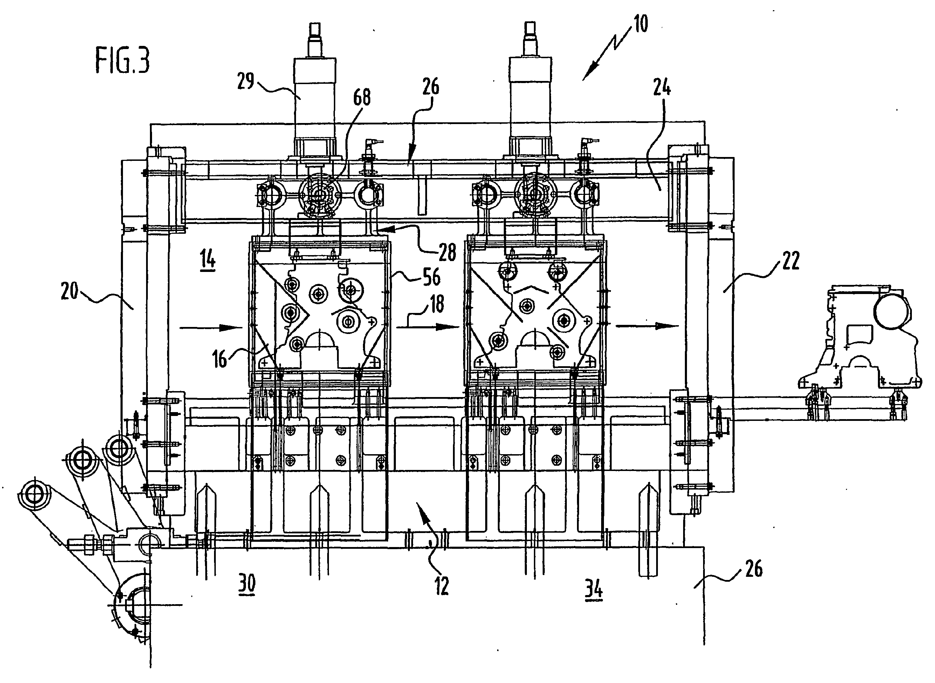

Ein Ausführungsbeispiel einer erfindungsgemäßen Werkzeugmaschine, die in den Figuren 1, 3 und 4 als Ganzes mit 10 bezeichnet ist, umfaßt eine ortsfest angeordnete Spannvorrichtung 12 zum Einspannen von Werkstücken für die Bearbeitung (Figur 3). Diese Spannvorrichtung 12 definiert einen Durchführungsraum 14 zum Durchtransport von Werkstücken 16 in einer Transportrichtung 18 durch die Werkzeugmaschine 10.

Bei dem gezeigten Ausführungsbeispiel umfaßt die Spannvorrichtung 12 zwei gegenüberliegende Portale 20, 22, welche einen oder mehrere in der Transportrichtung 18 ausgerichtete Träger 24 halten. Ein solcher Träger 24 weist einen bezogen auf die Schwerkraftrichtung vertikalen Abstand zu einer Unterseite der Spannvorrichtung 12 auf, über welche die Spannvorrichtung 12 auf eine Unterlage 26 aufgesetzt ist.

Die Spannvorrichtung umfaßt ein Spannelement 28, welches ein Werkstück 16 in der Spannvorrichtung 12 hält. Über das Spannelement 28 wird dann das eingespannte Werkstück 16 lokal (am Ort der Spannvorrichtung 12) in der Werkzeugmaschine 10 gehalten. Das Spannelement 28 läßt sich beispielsweise mittels eines hydraulischen Zylinders 29 bewegen und dabei insbesondere zufahren und wegfahren.

Die Werkzeugmaschine 10 umfaßt eine erste Bearbeitungsstation 30 mit einem entsprechenden ersten Arbeitsraum 32 und eine zweite Bearbeitungsstation 34 mit einem entsprechenden zweiten Arbeitsraum 36. An den Bearbeitungsstationen 30, 34 lassen sich bei in dem jeweiligen Arbeitsraum 32, 36 positionierten Werkstück 16 unterschiedliche Bearbeitungsvorgänge durchführen. Die Bearbeitungsstationen 30 und 34 mit ihren Arbeitsräumen 32 und 36 sind in Transportrichtung 18 aufeinanderfolgend angeordnet und insbesondere stationär bezüglich der Spannvorrichtung 12. Zur Bearbeitung werden die Werkstücke 16 von der einen Bearbeitungsstation 30 nach Abschluß der Bearbeitung dort in die andere Bearbeitungsstation 34 zur Weiterbearbeitung transportiert.

Die Werkzeugmaschine 10 ist dadurch eine Transfer-Werkzeugmaschine, bei der ein Transfer eines zu bearbeitenden Werkstücks zwischen unterschiedlichen Bearbeitungsstationen erfolgt.

Es ist grundsätzlich möglich, daß noch weitere nachfolgende Bearbeitungsstationen vorgesehen sind.

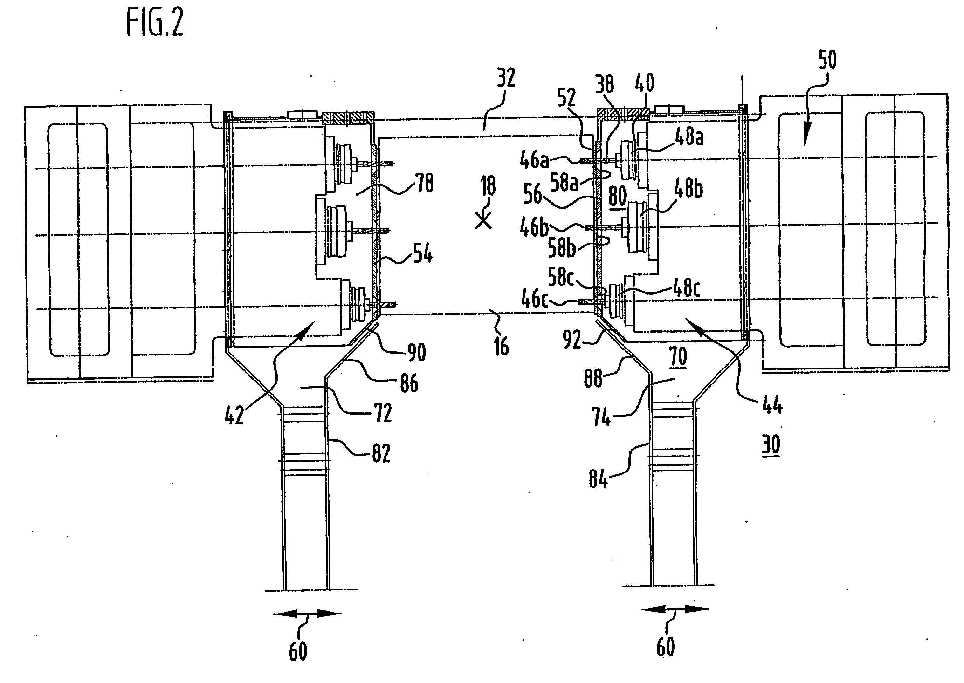

Jede Bearbeitungsstation 30, 34 weist zur Bearbeitung von Werkstücken 16 mindestens ein Werkzeug 38 auf, wie beispielsweise ein Bohrwerkzeug oder Fräswerkzeug, welches an einem Werkzeughalter 40 gehalten ist (Figur 2). Bei dem gezeigten Ausführungsbeispiel weist die Bearbeitungsstation 30 eine erste Werkzeugeinrichtung 42 und eine zweite Werkzeugeinrichtung 44 auf. Diese beiden Werkzeugeinrichtungen 42 und 44 sind, bezogen auf die Transportrichtung 18, einander gegenüberliegend angeordnet und insbesondere bezogen auf die Transportrichtung 18 symmetrisch zueinander angeordnet. Es läßt sich dadurch eine beidseitige Bearbeitung eines Werkstücks 16 durchführen, wenn dieses in dem entsprechenden Arbeitsraum 32 dieser Bearbeitungsstation 30 positioniert ist.

Bei dem gezeigten Ausführungsbeispiel umfaßt jede Werkzeugeinrichtung 42 drei Bohrwerkzeuge 46a, 46b und 46c, welche durch entsprechende Werkzeughalter 48a, 48b und 48c gehalten sind. Die Werkzeuge sind dabei über eine Antriebseinrichtung 50 angetrieben.

Erfindungsgemäß ist eine insbesondere plattenförmige Abdeckung 52 vorgesehen, welche jeder Werkzeugeinrichtung 42, 44 zugeordnet ist. Dementsprechend weist die erste Bearbeitungsstation 30 eine der ersten Werkzeugeinrichtung 42 zugeordnete erste Abdeckung 54 und die zweite Werkzeugeinrichtung 44 eine zweite Abdeckung 56 auf. Die Abdeckungen 54, 56 weisen jeweilige Öffnungen 58a, 58b und 58c auf, welche den Werkzeugen 46a, 46b und 46c zugeordnet sind und durch die die Werkzeuge 46a, 46b und 46c jeweils hindurchtreten können, um auf ein Werkstück 16 wirken zu können.

Die Abdeckungen 54, 56 begrenzen den Arbeitsraum 32 zu den Werkzeughaltern 48a, 48b, 48c hin, das heißt definieren eine seitliche Begrenzung des Arbeitsraums 32.

Erfindungsgemäß sind die Abdeckungen 54, 56 in einer Richtung 60 quer und insbesondere senkrecht zur Transportrichtung 18 beweglich. Diese Bewegungsrichtung 60 liegt insbesondere im wesentlichen parallel zu einer Längsrichtung der Werkzeuge 38 und einer Verschiebungsrichtung der Werkzeughalter 40 zur Zustellung der Werkzeuge 38 zu einem zu bearbeitenden Werkstück 16.

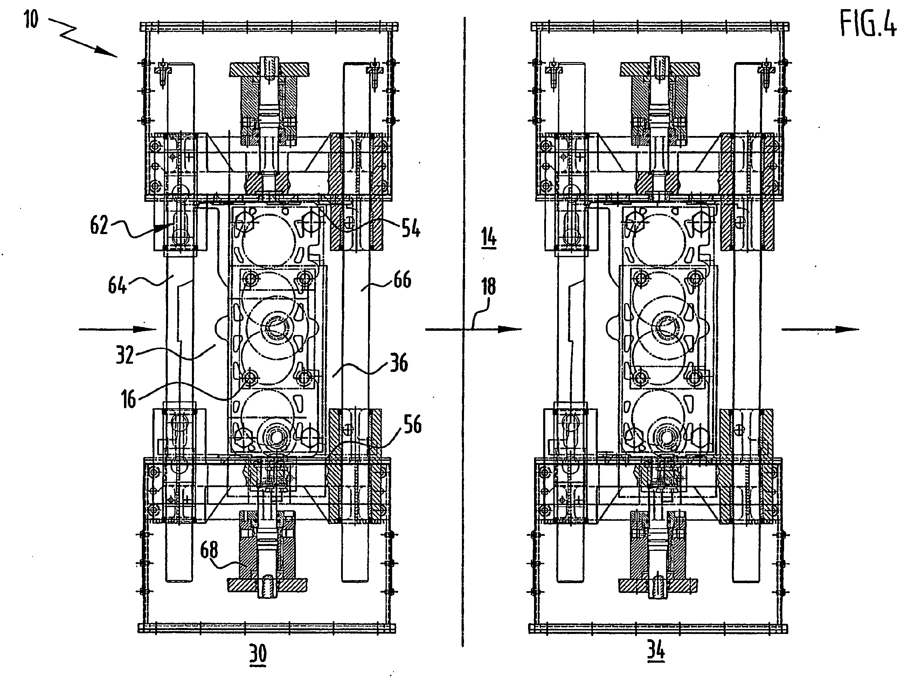

Insbesondere sind die Abdeckung 54, 56 in der Richtung 60 linear verschieblich. Dazu ist eine entsprechende Führungseinrichtung 62 vorgesehen, welche beispielsweise beabstandete Führungsträger 64, 66 (Figur 4) umfaßt, die an dem oder den Trägern 24 gehalten sind und sich quer und insbesondere senkrecht zur Transportrichtung 18 erstrecken. Es ist vorgesehen, daß die Führungsträger 64, 66 jeweils eine Führung für die Abdeckung 54 und für die Abdeckung 56 bilden.

Die Bewegung der Abdeckungen 54, 56 an der Führungseinrichtung 62 ist beispielsweise über einen hydraulischen Antrieb 68 angetrieben. Für jede Abdeckung 54, 56 ist vorzugsweise ein eigener Antrieb vorgesehen, wobei diese Antriebe miteinander synchronisiert sind, so daß, wie unten näher erläutert wird, die Abdeckungen 54, 56 synchronisiert zu einem Werkstück 16 hin zustellbar sind bzw. synchronisiert von dem Werkstück 16 weggehoben werden können.

Zur Abführung von bei der Bearbeitung eines Werkstücks 16 entstehenden Bearbeitungsabfällen und insbesondere Spänen ist ein als Ganzes mit 70 bezeichneter Abführungsraum vorgesehen, wobei der ersten Werkzeugeinrichtung 42 ein erster Abführungsraum 72 und der zweiten Werkzeugeinrichtung 44 ein zweiter Abführungsraum 74 zugeordnet ist. Die Abführungsräume 72, 74 stehen in Wirkverbindung mit einer Unterdruckbeaufschlagungseinrichtung 76 (Figur 1) wie beispielsweise einem Turbinenrad. Durch Unterdruckbeaufschlagung lassen sich Späne über die Abführungsräume 72, 74 absaugen und einem Späneförderer zuführen.

Hinter den Abdeckungen 54, 56 ist den jeweiligen Werkzeughaltern 40 zugewandt ein Abführungsraum 78, 80 (Figur 2) gebildet, welcher zumindest in einer vorderen Position der Abdeckungen 54, 56, in welcher diese einem Werkstück 16 zugestellt sind, in Wirkverbindung mit den Abführungsräumen 72, 74 steht und somit den gemeinsamen Abführungsraum 70 bilden. Späne, welche in die Abführungsräume 78, 80 eindringen, können dann abgesaugt werden.

Die Anordnung kann auch so sein, daß die Späne schwerkraftbedingt ohne Unterdruckbeaufschlagung in den Späneförderer fallen.

Ein ortsfest an der Spannvorrichtung 12 angeordnetes Gehäuse 82, 84, welches eine Begrenzung der Abführungsräume 72 und 74 bildet, weist einen bezogen auf die Richtung 60 schräg liegenden jeweiligen Bereich 86, 88 auf. Der Bereich 86 liegt in einem spitzen Winkel größer als 0° und kleiner als 90° zu der Richtung 60 (in dem gezeigten Ausführungsbeispiel beträgt dieser Winkel 45°).

Die Abdeckungen 54, 56 weisen einen entsprechend angepaßten schrägen Bereich 90, 92 auf, welcher im wesentlichen die gleiche Winkelstellung bezüglich der Richtung 60 hat wie der entsprechend zugeordneten Bereich 86, 88 des Gehäuses 82, 84. Zumindest in einer dem Werkstück 16 zugestellten Stellung der Abdeckungen 54, 56 (Figur 2) überlappen sich dann die zugeordneten Bereiche 86, 90 und 88, 92, so daß eine Abdichtung gegenüber dem Arbeitsraum 32 erreicht ist. Diese Abdichtung behindert dabei die Beweglichkeit der Abdeckungen 54, 56 nicht.

Die erfindungsgemäße Werkzeugmaschine 10 funktioniert wie folgt:

Über eine hier nicht beschriebene maschinenseitige Transfereinrichtung wird ein Werkstück 16 in der ersten Bearbeitungsstation 30 positioniert. Während der Positionierungsphase sind dabei die Abdeckungen 54, 56 in Richtung der Werkzeughalter 40 verschoben, so daß die Positionierung nicht behindert wird.

Nachdem das Werkstück 16 mit dem Spannelement 28 der Spannvorrichtung 12 örtlich gespannt ist, erhält eine entsprechende Steuerungsvorrichtung ein Freigabesignal, woraufhin die Abdeckungen 54, 56 von den jeweiligen Werkzeughaltern 40 wegbewegt werden und in Richtung des Werkstücks 16 zugestellt werden. Vorzugsweise werden die Abdeckungen 54, 56 auf gegenüberliegenden Seiten an das Werkstück 16 angelegt. An den Öffnungen 58a, 58b, 58c können in den Arbeitsraum 32 weisende umlaufende wulstförmige Erhebungen gebildet sein, um eine verbesserte Abdichtung einer Werkzeug-Wirkzone an dem Werkstück 16 gegenüber dem Arbeitsraum 32 zu erhalten.

Die Werkzeuge 38 werden dann durch die jeweiligen Öffnungen 58a, 58b, 58c durch entsprechende Bewegung der Werkzeughalter 48a, 48b, 48c in Richtung des Werkstücks 16 getaucht und es werden die entsprechenden Bearbeitungsvorgänge wie Bohrbearbeitungsvorgänge oder Fräsvorgänge durchgeführt.

Die Abdeckungen 54, 56 stellen dabei eine Art von Schablone dar, wobei die Werkzeuge 46a, 46b, 46c über die Öffnungen 58a, 58b, 58c auf das Werkstück 16 wirken. Hinter den Abdeckungen 54, 56 sind den jeweiligen Werkzeughaltern 40 zugewandt die Abführungsräume 78, 80 gebildet, welche über die Öffnungen 58a, 58b, 58c in Verbindung mit einem Wirkbereich der Werkzeuge 46a, 46b, 46c auf das Werkstück 16 stehen. Die Abführungsräume 78, 80, welche über die Abführungsräume 72, 74 unterdruckbeaufschlagt sind, saugen zu einem großen Teil bei der Bearbeitung des Werkstücks 16 entstehende Späne an, die dann über die Abführungsräume 70 abgeführt werden.

Bei der erfindungsgemäßen Lösung ist während der Bearbeitung des Werkstücks 16 der entsprechende Arbeitsraum 32 mit minimierter Querabmessung (in einer Richtung quer zur Transportrichtung 18) ausgebildet. Weiterhin werden Späne abgeführt und insbesondere abgesaugt. Dadurch ist der Anteil an Spänen, die in den Arbeitsraum 32 gelangen können und diesen verschmutzen, minimiert, das heißt, das Eindringen von Spänen in die Werkstück-Werkzeug-Seite ist minimiert. Entsprechend weist der Arbeitsraum 32 während der Bearbeitung ein minimiertes Volumen auf.

Nach Beendigung des Bearbeitungsvorgangs wird das bearbeitete Werkstück 16 freigegeben, indem die Abdeckungen 54, 56 von dem Werkstück weg in Richtung der Werkzeughalter 40 verschoben werden. Entsprechend werden auch die Werkzeughalter weg verschoben, so daß die Werkzeuge 46a, 46b, 46c nicht mehr in den Arbeitsraum 32 ragen. Nach der Freigabe der Werkstücke können diese von der Transfereinrichtung zu der nächsten Bearbeitungsstation 34 transportiert werden, an denen eine Weiterbearbeitung möglich ist.

Durch die erfindungsgemäße Lösung wird eine breite Streuung von während der Bearbeitung erzeugten Spänen vermieden und die entstehenden Späne werden gezielt abgeführt. Dies ist insbesondere vorteilhaft bei einer Transfer-Werkzeugmaschine, bei der in den einzelnen Bearbeitungsstationen 30, 34 kein Werkzeugwechsel stattfindet und bei dem die grundlegenden Bearbeitungsvorgänge pro Bearbeitungsstation 30, 34 die gleichen sind.

Durch die Beweglichkeit der Abdeckungen 54, 56 ist ferner ein freier Transport für die Werkstücke 16 gewährleistet, wenn einer Bearbeitungsstation 30 bzw. 34 ein Werkstück 16 zugeführt werden soll bzw. ein bearbeitetes Werkstück von einer entsprechenden Bearbeitungsstation 30, 34 abgeführt werden soll.

Die Abdeckungen 54, 56 können grundsätzlich austauschbar ausgebildet sein, um so eine Anpassung an unterschiedliche Werkstücke 16 bzw. unterschiedliche Bearbeitungsvorgänge zu ermöglichen.

Erfindungsgemäß wird zur Bearbeitung eine Art von Tunnel bereitgestellt. Nur in dem Tunnel (den Arbeitsräumen 32, 36 mit den Werkstücken 16 zugestellten Abdeckungen 54, 56) wird eine Bearbeitung durchgeführt. Dadurch läßt sich ein modularer Aufbau insbesondere für eine Transfer-Werkzeugmaschine erreichen. An jeder Bearbeitungsstation kann dann getrennt und dezentral für eine Späneabführung gesorgt werden, so daß insbesondere die einzelnen Bearbeitungsstationen bezüglich des Bearbeitungsvorgangs unabhängig voneinander ausgebildet werden können.

Das Verfahren, bei dem zur Bearbeitung von Werkstücken 16 die Abdeckungen 54, 56 an ein zu bearbeitendes Werkstück 16 herangefahren werden und Werkzeuge 46a, 46b, 46c über Öffnungen 58a, 58b, 58c in den Abdeckungen 54, 56 auf das Werkstück 16 wirken, wobei eine Späneabfuhr über einen Abführungsraum 70 hinter den Abdeckungen 54, 56 erfolgt, läßt sich vorteilhafter bei der Trockenbearbeitung einsetzen, bei der kein Schmiermittel verwendet wird oder Minimalschmierung eingesetzt wird. Grundsätzlich läßt sich das erfindungsgemäße Verfahren aber auch bei der Naßbearbeitung einsetzen. Es ist auch möglich, das erfindungsgemäße Verfahren bei Bearbeitungszentren zu verwenden.

## Patentansprüche

1. Werkzeugmaschine mit einem Arbeitsraum (32; 36), in welchem Werkstücke (16) positionierbar sind und mit mindestens einem durch einen Werkzeughalter (40) gehaltenen Werkzeug (38) bearbeitbar sind, mit mindestens einer beweglichen Abdeckung (52; 54; 56), welche den Arbeitsraum (32; 36) in Richtung des Werkzeughalters (40) begrenzt und einem Werkstück (16) zustellbar ist, wobei die Abdeckung mit mindestens einer dem Werkzeug (38) zugeordneten Öffnung (58a; 58b; 58c) zum Durchtritt des Werkzeugs (38) versehen ist, und mit einem Abführungsraum (70) für Späne,
**dadurch gekennzeichnet , daß** die Abdeckung (54; 56) und eine außerhalb der Abdeckung (54; 56) liegende ortsfeste Begrenzung (86; 88) des Abführungsraums (70) zur Bildung einer Dichtung überlappend angeordnet sind, wenn die Abdeckung (54; 56) dem Werkstück (16) zugestellt ist.

2. Werkzeugmaschine nach Anspruch 1, **dadurch gekennzeichnet, daß** die Abdeckung (52; 54; 56) den Abführungsraum (70) zu dem Arbeitsraum (32; 36) hin begrenzt.

3. Werkzeugmaschine nach Anspruch 1 oder 2, **dadurch gekennzeichnet, daß** der Abführungsraum (70) einen Bereich (78; 80) umfaßt, welcher zwischen der Abdeckung (54; 56) und dem Werkzeughalter (40) gebildet ist.

4. Werkzeugmaschine nach einem der vorangehenden Ansprüche, **dadurch gekennzeichnet, daß** der Abführungsraum (70) in Wirkverbindung mit einer Unterdruckbeaufschlagungseinrichtung (76) steht.

5. Werkzeugmaschine nach einem der vorangehenden Ansprüche, **dadurch gekennzeichnet, daß** die Abdeckung (54; 56) im Überlappungsbereich einen Bereich (90; 92) aufweist, welcher schräg zu einem am Werkstück (16) anlegbaren Bereich liegt.

6. Werkzeugmaschine nach einem der vorangehenden Ansprüche, **dadurch gekennzeichnet, daß** die Abdeckung (52; 54, 56) in einer Richtung (60) quer zu einer Transportrichtung (18) von Werkstücken (16) durch den Arbeitsraum (32; 36) verschieblich ist.

7. Werkzeugmaschine nach einem der vorangehenden Ansprüche, **dadurch gekennzeichnet, daß** die Bewegung der Abdeckung (52; 54; 56) angetrieben ist.

8. Werkzeugmaschine nach einem der vorangehenden Ansprüche, **dadurch gekennzeichnet, daß** die Abdeckung (52; 54; 56) an ein zu bearbeitendes Werkstück (16) anlegbar ist.

9. Werkzeugmaschine nach einem der vorangehenden Ansprüche, **dadurch gekennzeichnet, daß** die mindestens eine Öffnung (58a; 58b; 58c) in der Abdeckung (52; 54; 56) so groß ist, daß Späne in den Abführungsraum (70) gelangen.

10. Werkzeugmaschine nach einem der vorangehenden Ansprüche, **dadurch gekennzeichnet, daß** der Arbeitsraum (32; 36) quer zur Transportrichtung (18) auf gegenüberliegenden Seiten durch Abdeckungen (54, 56) begrenzt ist.

11. Werkzeugmaschine nach Anspruch 10, **dadurch gekennzeichnet, daß** die Abdeckungen (54, 56) synchron beweglich sind.

12. Werkzeugmaschine nach einem der vorangehenden Ansprüche, **dadurch gekennzeichnet, daß** eine Transfereinrichtung zum Transport von Werkstücken (16) durch den Arbeitsraum (32; 36) vorgesehen ist.

13. Werkzeugmaschine nach Anspruch 12, **dadurch gekennzeichnet, daß** die mindestens eine Abdeckung (52; 54; 56) und die Transfereinrichtung synchronisiert gesteuert sind.

14. Werkzeugmaschine nach einem der vorangehenden Ansprüche, **dadurch gekennzeichnet, daß** die mindestens eine Abdeckung (52; 54; 56) austauschbar angeordnet ist.

15. Werkzeugmaschine nach einem der vorangehenden Ansprüche, **dadurch gekennzeichnet, daß** eine Mehrzahl von Arbeitsräumen (32, 36) vorgesehen ist.

16. Transfer-Werkzeugmaschine, welche mindestens eine Werkzeugmaschine gemäß einem der vorangehenden Ansprüche umfaßt, wobei eine Mehrzahl von Arbeitsräumen (32, 36) vorgesehen ist.

17. Transfer-Werkzeugmaschine nach Anspruch 16, **dadurch gekennzeichnet, daß** eine Mehrzahl von Bearbeitungsstationen (30, 34) mit jeweiligen Arbeitsräumen (32, 36) vorgesehen ist.

18. Transfer-Werkzeugmaschine nach Anspruch 16 oder 17, **dadurch gekennzeichnet, daß** die Arbeitsräume (32, 36) in Transportrichtung (18) von Werkstücken (16) aufeinander folgen.

19. Transfer-Werkzeugmaschine nach einem der Ansprüche 16 bis 18, **dadurch gekennzeichnet, daß** die Späneabführung und/oder Kühlmittelabführung an den Arbeitsräumen (32, 36) individuell erfolgt.

## Claims

1. Machine tool comprising a working area (32; 36), workpieces (16) being positionable in said area and being machinable with at least one tool (38) held by a tool holder (40), at least one movable cover (52; 54; 56) limiting the working area (32; 36) in the direction of the tool holder (40) and being adapted to be advanced towards a workpiece (16), wherein the cover is provided with at least one opening (58a; 58b; 58c) associated with the tool (38) for the passage of the tool (38), and a discharge area (70) for shavings,
**characterized in that** the cover (54; 56) and a stationary boundary (86; 88) of the discharge area (70) located outside the cover (54; 56) are arranged so as to overlap in order to form a seal when the cover (54; 56) is advanced towards the workpiece (16).

2. Machine tool as defined in claim 1, **characterized in that** the cover (52; 54; 56) limits the discharge area (70) towards the working area (32; 36).

3. Machine tool as defined in claim 1 or 2, **characterized in that** the discharge area (70) comprises a section (78; 80) formed between the cover (54; 56) and the tool holder (40).

4. Machine tool as defined in any one of the preceding claims,
**characterized in that** the discharge area (70) is operatively connected to a device (76) acting with vacuum pressure.

5. Machine tool as defined in any one of the preceding claims,
**characterized in that** in the overlapping area the cover (54; 56) has a section (90; 92) oblique to a section adapted to abut on the workpiece (16).

6. Machine tool as defined in any one of the preceding claims,
**characterized in that** the cover (52; 54, 56) is displaceable in a direction (60) transverse to a direction of transport (18) of workpieces (16) through the working area (32; 36).

7. Machine tool as defined in any one of the preceding claims,
**characterized in that** the movement of the cover (52; 54; 56) is driven.

8. Machine tool as defined in any one of the preceding claims,
**characterized in that** the cover (52; 54; 56) is adapted to abut on a workpiece (16) to be machined.

9. Machine tool as defined in any one of the preceding claims,
**characterized in that** the at least one opening (58a; 58b; 58c) in the cover (52; 54; 56) is of such a size that shavings pass into the discharge area (70).

10. Machine tool as defined in any one of the preceding claims,
**characterized in that** the working area (32; 36) is limited by covers (54, 56) on oppositely located sides transverse to the direction of transport (18).

11. Machine tool as defined in claim 10, **characterized in that** the covers (54, 56) are movable synchronously.

12. Machine tool as defined in any one of the preceding claims,
**characterized in that** a transfer device for the transport of workpieces (16) through the working area (32; 36) is provided.

13. Machine tool as defined in claim 12, **characterized in that** the at least one cover (52; 54; 56) and the transfer device are controlled in a synchronized manner.

14. Machine tool as defined in any one of the preceding claims,
**characterized in that** the at least one cover (52; 54; 56) is arranged so as to be exchangeable.

15. Machine tool as defined in any one of the preceding claims,
**characterized in that** a plurality of working areas (32, 36) is provided.

16. Transfer machine tool comprising at least one machine tool in accordance with any one of the preceding claims, wherein a plurality of working areas (32, 36) is provided.

17. Transfer machine tool as defined in claim 16, **characterized in that** a plurality of machining stations (30, 34) with respective working areas (32, 36) is provided.

18. Transfer machine tool as defined in claim 16 or 17, **characterized in that** the working areas (32, 36) follow one another in the direction of transport (18) of workpieces (16).

19. Transfer machine tool as defined in any one of claims 16 to 18,
**characterized in that** the discharge of shavings and/or discharge of coolant is brought about individually at the working areas (32, 36).

## Revendications

1. Machine-outil avec une chambre de travail (32; 36), dans laquelle des pièces (16) peuvent être positionnées et usinées avec au moins un outil (38) maintenu par un porte-outil (40), comportant au moins un couvercle mobile (52; 54; 56) qui limite la chambre de travail (32; 36) en direction du porte-outil (40) et qui peut être approché d'une pièce (16), dans laquelle le couvercle est pourvu d'au moins une ouverture (58a; 58b; 58c) associée à l'outil (38) pour le passage de l'outil (38), et une chambre d'évacuation (70) pour les copeaux, **caractérisée en ce que** le couvercle (54; 56) et une paroi fixe (86; 88) de la chambre d'évacuation (70) située à l'extérieur du couvercle (54; 56) sont disposées en chevauchement pour former un joint d'étanchéité, lorsque le couvercle (54; 56) est approché de l'outil (16).

2. Machine-outil selon la revendication 1, **caractérisée en ce que** le couvercle (52; 54; 56) limite la chambre d'évacuation (70) en direction de la chambre de travail (32; 36).

3. Machine-outil selon la revendication 1 ou 2, **caractérisée en ce que** la chambre d'évacuation (70) comprend une zone (78; 80) qui est formée entre le couvercle (54; 56) et le porte-outil (40).

4. Machine-outil selon l'une quelconque des revendications précédentes, **caractérisée en ce que** la chambre d'évacuation (70) est en liaison active avec un dispositif d'application d'une dépression (76).

5. Machine-outil selon l'une quelconque des revendications précédentes, **caractérisée en ce que** le couvercle (54; 56) présente dans la zone de chevauchement une zone (90; 92) qui est oblique par rapport à une zone applicable sur la pièce (16).

6. Machine-outil selon l'une quelconque des revendications précédentes, **caractérisée en ce que** le couvercle (52; 54; 56) est déplaçable dans une direction (60) transversale à une direction de transport (18) de pièces (16) à travers la chambre de travail (32; 36).

7. Machine-outil selon l'une quelconque des revendications précédentes, **caractérisée en ce que** le mouvement du couvercle (52; 54; 56) est entraîné.

8. Machine-outil selon l'une quelconque des revendications précédentes, **caractérisée en ce que** le couvercle (52; 54; 56) peut être appliqué sur une pièce à usiner (16).

9. Machine-outil selon l'une quelconque des revendications précédentes, **caractérisée en ce que** l'au moins une ouverture (58a; 58b; 58c) dans le couvercle (52; 54; 56) est tellement grande que les copeaux parviennent dans la chambre d'évacuation (70).

10. Machine-outil selon l'une quelconque des revendications précédentes, **caractérisée en ce que** la chambre de travail (32; 36) est limitée par des couvercles (54, 56) sur des côtés opposés, transversalement à la direction de transport (18).

11. Machine-outil selon la revendication 10, **caractérisée en ce que** les couvercles (54, 56) sont mobiles de façon synchrone.

12. Machine-outil selon l'une quelconque des revendications précédentes, **caractérisée en ce que** l'on prévoit un dispositif de transfert pour le transport de pièces (16) à travers la chambre de travail (32; 36).

13. Machine-outil selon la revendication 12, **caractérisée en ce que** l'au moins un couvercle (52; 54; 56) et le dispositif de transfert sont commandés de manière synchronisée.

14. Machine-outil selon l'une quelconque des revendications précédentes, **caractérisée en ce que** l'au moins un couvercle (52 ; 54 ; 56) est disposé de manière interchangeable.

15. Machine-outil selon l'une quelconque des revendications précédentes, **caractérisée en ce que** l'on prévoit une pluralité de chambres de travail (32, 36).

16. Machine-outil de transfert, qui comprend au moins une machine-outil selon l'une quelconque des revendications précédentes, dans laquelle on prévoit une pluralité de chambres de travail (32, 36).

17. Machine-outil de transfert selon la revendication 16, **caractérisée en ce que** l'on prévoit une pluralité de postes d'usinage (30, 34) avec des chambres de travail respectives (32, 36).

18. Machine-outil de transfert selon la revendication 16 ou 17, **caractérisée en ce que** les chambres de travail (32, 36) se suivent dans la direction de transport (18) des pièces (16).

19. Machine-outil de transfert selon l'une quelconque des revendications 16 à 18, **caractérisée en ce que** l'évacuation des copeaux et/ou l'évacuation du liquide de refroidissement s'effectue individuellement aux chambres de travail (32, 36).
